# EUROPEAN PATENT APPLICATION

(11) **EP 2 919 106 A1**
(43) Date of publication of application: **16.09.2015**
(21) Application number: 15150763.9
(22) Date of filing: 12.01.2015
(51) Int. Cl.: G06F 3/0485

(54) **Electronic device and method for displaying content**

(30) Priority: 14.03.2014 KR 20140030231
(71) Applicant: Samsung Electronics Co., Ltd, Gyeonggi-do 443-742 (KR)
(72) Inventor: Heo, Yoo-Li, Gyeonggi-do (KR); Han, Bong-Hee, Gyeonggi-do (KR); Haliburton, James George, 21429 Malmo (SE); Reimer, Nils Roger Andersson, 21129 Malmo (SE); Eriksson, Per Marcus, 21424 Malmo (SE)
(74) Representative: Nederlandsch Octrooibureau

(57) **Abstract**

A method and an electronic device are provided for displaying content. The electronic device includes a display unit that is configured to display an image in a first area and display text in a second area, when content including the image and the text is provided; and a controller configured to detect a user input provided on the display unit, move a portion of the content in response to the user input, and display an undisplayed portion of at least one of the image and the text in the first and second areas of the display unit, respectively.

## Description

### BACKGROUND OF THE INVENTION

### Field of the Invention

The present disclosure relates generally to an electronic device, and more particularly, to an electronic device and method for displaying content, e.g., an image and text.

### Description of the Related Art

An electronic device displays various content, e.g., received through an Internet service or via messaging. Examples of the content include a still image such as a picture, a moving image such as a video, and text.

Often, the electronic device displays a still image or plays back a video, while simultaneously displaying related text. However, when displaying an image and the associated text on a single screen, the electronic device may not actually be capable of displaying the entire text while the image is displayed, due to the size of the image or due the amount of text being too large. Consequently, a user then views any undisplayed portion of the text by scrolling. However, when scrolling, the image is then not displayed on the screen and the user needs to scroll again to view the image.

### SUMMARY OF THE INVENTION

The present disclosure is designed to address at least the problems and/or disadvantages described above and to provide at least the advantages described below.

Accordingly, an aspect of the present disclosure is to provide an electronic device and a content displaying method of an electronic device, in which an image and related text included in content are simultaneously displayed on a single screen.

In accordance with an aspect of the present disclosure, an electronic device is provided, which includes a display unit configured to diplay an image in a first area and display text in a second area, when content including the image and the text are provided; and a controller configured to detect a user input provided on the display unit, move a portion of the content in response to the user input, and display an undisplayed portion of at least one of the image and the text in the first and second areas of the display unit, respectively.

In accordance with another aspect of the present disclosure, a method is provided for displaying content in an electronic device. The method includes displaying an image and text in a first area and a second area of a display unit, respectively, when the image and the text are included in the content; detecting a user input provided on the display unit; and moving the text in response to the user input, to display an undisplayed portion of the text in the second area.

### BRIEF DESCRIPTION OF THE DRAWINGS

The above and other aspects, features, and advantages certain embodiments of the present disclosure will be more apparent from the following detailed description taken in conjunction with the accompanying drawings, in which:
FIG. 1 illustrates an electronic device according to an embodiment of the present disclosure;
FIGs. 2A and 2B are flowcharts illustrating an operation of displaying content in an electronic device according to an embodiment of the present disclosure;
FIGs. 3A and 3B are diagrams illustrating an operation of editing an image in an electronic device according to an embodiment of the present disclosure;
FIGs. 4A to 4E are diagrams illustrating an operation of displaying content in an electronic device according to an embodiment of the present disclosure;
FIG. 5 is a flowchart illustrating an operation of displaying content in an electronic device according to an embodiment of the present disclosure;
FIG. 6 is a flowchart illustrating an operation of displaying content in an electronic device according to an embodiment of the present disclosure; and
FIG. 7 is a flowchart illustrating an operation of displaying content in an electronic device according to an embodiment of the present disclosure.

### DETAILED DESCRIPTION OF THE EXEMPLARY EMBODIMENTS

Hereinafter, various embodiments of the present disclosure will be described with reference to enclosed drawings. The present disclosure may have various modifications and embodiments, and thus, will be described in detail with reference to specific embodiments illustrated in the drawings. However, is the present disclosure is not limited to the specific embodiments, and it shall be appreciated that all the changes, equivalents and substitutions belonging to the idea and technical scope of the present disclosure are included in the present disclosure. In descriptions of the drawings, similar elements are indicated by similar reference numerals.

The expressions that may be used in various embodiments of the present disclosure, such as, "comprise", "may comprise" or the like indicate the existence of a disclosed corresponding function, operation, component element, or the like, and may not limit additional one or more functions, operations, component elements or the like. In the present disclosure, the terms such as "comprise" and/or "have" may be construed to denote the existence of a disclosed characteristic, number, step, operation, component element, component or a combination thereof, but may not be construed to exclude the existence of or a possibility of addition of one or more other characteristics, numbers, steps, operations, component elements, components or combinations thereof.

The expression such as "or" or the like in various embodiments of the present disclosure include any and all of the combinations of words disclosed together. For example, the expression "A or B" may include A, may include B, or may include both A and B.

The expressions such as "first," "second," or the like used in various embodiments of the present disclosure may modify various component elements in the various embodiments, but should not limit corresponding component elements. For example, the above expressions do not limit the sequence and/or importance of the elements. The expressions may be used to distinguish a component element from another component element. For example, a first user device and a second user device indicate different user devices although both of them are user devices. For example, without departing from the scope of the present disclosure, a first structural element may be referred to as a second structural element. Similarly, the second structural element also may be referred to as the first structural element.

It should be noted that in a description of one component element being "coupled" or "connected" to another component element, the first component element may be directly coupled or connected to the second component, and a third component element may be "coupled" or "connected" between the first and second component elements. Conversely, when one component element is "directly coupled" or "directly connected" to another component element, it may be construed that a third component element does not exist between the first component element and the second component element.

The terms used in various embodiments of the present disclosure are merely used to exemplify certain embodiments thereof, and should not limit various embodiments of the present disclosure.

Further, singular forms are intended to include plural forms unless the context clearly indicates otherwise.

Unless defined differently, all terms used herein, which include technical terminologies or scientific terminologies, have the same meaning as known to a person skilled in the art to which the present disclosure belongs. Such terms as those defined in a general dictionary are to be interpreted to have the meanings as the contextual meanings in the relevant field of art, and are not to be interpreted to have ideal or excessively formal meanings, unless clearly defined in the present disclosure.

An electronic device according to various embodiments of the present disclosure may include a device including a communication function. For example, the electronic device may include a smart phone, a table Personal Computer (PC), a mobile phone, a video phone, an electronic book reader (e-book reader), a desktop PC, a laptop PC, a netbook computer, a Personal Digital Assistant (PDA), a Portable Multimedia Player (PMP), an MP3 player, a mobile medical device, a camera, and a wearable device, for example, a Head-Mounted Device (HMD), such as electronic glasses, electronic clothes, an electronic bracelet, an electronic necklace, an electronic appcessory, an electronic tattoo, or a smart watch.

According to an embodiment of the present disclosure, an electronic device may be a smart home appliance with a communication function. The smart home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a TV box (for example, Samsung HomeSync^{®}, Apple TV ^{®}, or Google TV ^{®}), a game console, an electronic dictionary, an electronic key, a camcorder, and an electronic picture frame.

According to an embodiment of the present disclosure, an electronic device may include various medical devices such as a Magnetic Resonance Angiography (MRA) scanner, a Magnetic Resonance Imaging (MRI) scanner, a Computed Tomography (CT) scanner, a scanner, an ultrasonograph, or the like, a navigation device, a Global Positioning System (GPS) receiver, an Event Data Recorder (EDR), a Flight Data Recoder (FDR), a vehicle infotainment device, an electronic equipment for ship (for example, a ship navigation device), a gyro-compass and the like, avionics, a security device, a head unit for vehicle, an industrial or household robot, an Automatic Teller Machine (ATM) in banking facilities or Point Of Sale (POS) terminal in a store, etc.

According to an embodiment of the present disclosure, an electronic device may include a part of furniture or a building/structure having a communication function, an electronic board, an electronic signature receiving device, a projector, and various types of measuring instruments (for example, a water meter, an electric meter, a gas meter, a radio wave meter, etc.).

Additionally, an electronic device according to an embodiment of the present disclosure may also be a combination of one or more of above described various devices.

Further, an electronic device according to an embodiment of the present disclosure is not limited to the above described example devices.

Herein, the term "user" may indicate a user, i.e., a person, who uses an electronic device or a device that uses an electronic device such as an artificial intelligence electronic device.

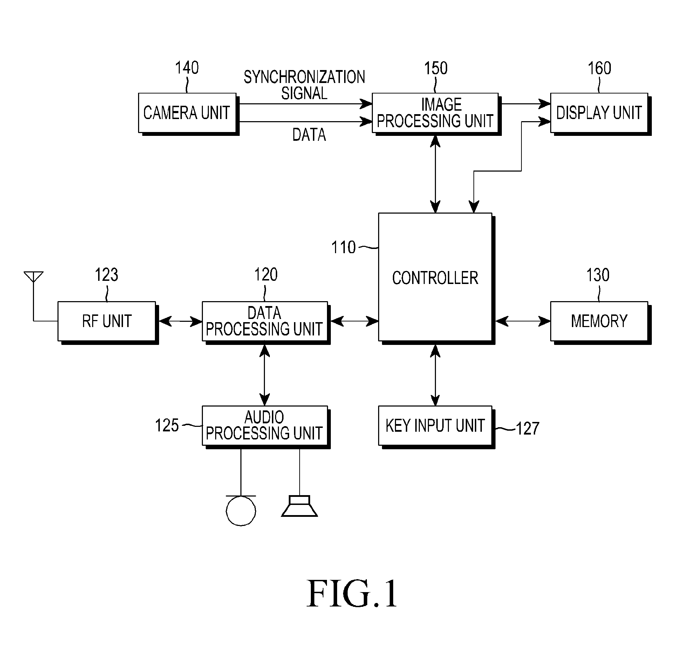

FIG. 1 illustrates an electronic device according to an embodiment of the present disclosure.

Referring to FIG. 1, the electronic device includes a Radio Frequency (RF) unit 123, a data processing unit 120, an audio processing unit 125, a key input unit 127, a memory 130, a controller 110, a display unit 160, an image processing unit 150, and a camera unit 140.

The RF unit 123 transmits and receives data using an RF signal. Although not illustrated, the RF unit 123 may include, for example, a transceiver, a Power Amp Module (PAM), a frequency filter, a Low Noise Amplifier (LNA), or the like.

The data processing unit 120 includes a transmitter that encodes and modulates a signal to be transmitted, a receiver that decodes and demodulates a received signal, etc. The data processing unit 120 may also include a MOdulator/DEModulator (MODEM) and a COder/DECoder (CODEC). For example, the CODEC may include a data CODEC for processing packet data and the like, and an audio CODEC for processing an audio signal, such as voice, and the like.

The audio processing unit 125 performs a function of playing back a received audio signal output from an audio CODEC of the data processing unit 120 or transmitting a transmitted audio signal generated from a microphone to the audio codec of the data processing unit 120.

The key input unit 127 includes a physical button, an optical key, or a keypad.

The memory 130 may be formed of a program memory, a data memory, and the like. The program memory may store a program for controlling general operations of an electronic device, a program for controlling the display of the entire portion of a related text while an image is displayed when the image and the related text included in content are displayed, or the like. Also, the data memory may store data generated while the programs are executed.

The memory 130 may also store at least one image and at least one text included in content, and an identifier assigned to each of at least one portion of the text.

The controller 110 controls general operations of the electronic device. For example, when an image and text are included in content, the controller 110 separates the display unit 160 into a first area and a second area, and displays, in the first area, an image and displays, in the second area, text including an identifier of image information associated with the image displayed in the first area.

Further, when an image and text are included in the content, the controller 110 may sequentially detect at least one image and at least one text included in the content, and assign, to the detected image, the detected text, and each portion of the detected text, an identifier including image information associated with the detected image and sequence information. For example, the identifier may be a set of information related to the detected image and sequence information. The information related to the image is information for selecting text associated with the detected image. The sequence information is information associated with an order of displaying the detected image or text.

According to an embodiment of the present disclosure, the controller 110 detects an image or text included in the content, and assigns an identifier, e.g., "Multimedia N (N is an order of detection of an image)", when an image is detected, and assigns an identifier, e.g., "Text N (text associated with Multimedia N)", when text is detected.

When there are successive images in the content, the controller 110 may assign an identifier including sequence information associated with the images, e.g., Multimedia N-1, Multimedia N-2, etc.

When there are at least two images having an identifier including related sequence information, the controller 110 may adjust the size of at least one image in order to display all of the related images in the first area, or may display, in the first area, a popup icon or the like, providing a mechanism for the related images to be viewed.

When text is detected for a single image in the content, the controller 110 may assigns an identifier (Text N) of the image information to the text when it is determined that the text is related to the image (Multimedia N) by analyzing the data of the text. When at least two text portions are included in the detected text (Text N), the controller 110 may assign sequence information identifier (for example, Text N-1 and Text N-2) to each portion.

The controller 110 may match an image (for example, Multimedia N) corresponding to one of the identifiers and text related to the image (for example, Text N-1,Text N-2,.., and the like) and may store the same in the memory 130.

When the size of the first area and the size of an image are different from each other and the image is displayed in the first area of the display unit 160, the controller 110 may enlarge or reduce the size of the image to fit in the first area.

When a ratio between the size of the image and the size of the first area does not match, and a difference in the ratio is less than or equal to a threshold value (for example, less than or equal to 50%), the controller 110 may enlarge or reduce the horizontal length of the image to correspond to the horizontal length of the first area, and edit the vertical length of the image to correspond to the vertical length of the first area. The controller 110 may display the edited image in the first area.

When a ratio between the size of the image and the size of the first area does not match, and a difference in the ratio is greater than or equal to a threshold value (for example, greater than or equal to 50%), the controller 110 may enlarge or reduce the horizontal length of the image to correspond to the horizontal length of the first area. The controller 110 may edit the vertical length of the first image of which the horizontal length is enlarged or reduced, to correspond to the vertical length of the first image, and may display the rescaled first image in the first area. The controller 110 may then display a popup icon that displays the original first image before being rescaled, in the first area that displays the rescaled first image.

The size and the location of the first area and the second area may be adjusted by a user.

When an image and text including an identifier of the image information are displayed in the first area and the second area, respectively, the controller 110 may deactivate the first area and while leaving the second area active. When a user input (for example, scrolling upward or downward) is provided on the display unit 160 while an image and text including an identifier of the image information are displayed in the first area and the second area, respectively, the controller 110 moves the text displayed on the active second area in response to the user input, in order to display an undisplayed portion of the text in the second area.

When an identifier of at least one of the image in the first area and the text in the second area is changed while the user input is generated, the controller 110 may change the image and the text to another image and text including an identifier of image information associated with the other image, for display in the first area and the second area.

When an image and text are included in the content, the controller 110 may separate the display unit 160 into a first area and a second area. The controller 110 may display a first image of at least one image of the content in the first area, and may display, in the second area, a first text including an identifier of first image information, from among at least one text of the content.

When the user input (for example, upward and downward scrolling) is provided on the display unit 160, the controller 110 moves the first text in response to the user input, in order to display an undisplayed portion of the first text in the second area.

When the user input is provided on the display unit 160 while a last portion of the first text is displayed in the second area, the controller 110 may display a second image that is a subsequent image of the first image and a second text including an identifier of second image information, in response to the user input.

When the second image is a moving image, and the second image is displayed in the first area, the controller 110 may play back the second image.

When a user input is provided after the second image is displayed in the first area, the controller 110 may move the second text in response to the user input in order to display an undisplayed portion of the second text in the second area. For example, the moving image may be played back, stopped, or paused in the first area.

When the user input is provided on the display unit 160 while the first image is displayed in the first area and the first text including the identifier of the first image information is displayed in the second area, the controller 110 may move the first text in response to the user input in order to display an undisplayed portion of the first text in the second area.

When the user input is provided on the display unit 160 while the last portion of the first text is displayed in the second area, the controller 110 may display, in the first area, the second image which is the subsequent image of the first image, and may display, in the second area, the second text including the identifier of the second image information.

When the user input is provided in the first area while the first image is displayed in the first area and the first text including an identifier of the first image information is displayed in the second area, the controller 110 may display the second image, which is a subsequent image of the first image, in the first area, and may display the second text including an identifier of the second image information in the second area.

When the user input is provided in the second area, the controller 110 may move the second text in response to the user input, in order to display an undisplayed portion of the second text in the second area.

When an image and text are included in the content, the controller 110 may display, in the first area, the first image and at least one identifier assigned to at least one image included in the content, and may display, in the second area, the first text including an identifier of the first image information.

When at least one identifier is selected from the first area, the controller 110 may display an image including the selected identifier in the first area, and may display, in the second area, text including an identifier of image information associated with the image displayed in the first area.

The display unit 160 may include a panel and the like. For example, the panel may be a Liquid Crystal Display (LCD), an Active Matrix Organic Light Emitting Diode (AM-OLED), etc. The panel may also be embodied to be, for example, flexible, transparent, or wearable.

The panel may be formed as a single module with a touch panel. The display unit 160 may further include a control circuit for controlling the panel. The touch panel may recognize a touch input based on at least one scheme among, for example, a capacitive scheme, a resistive scheme, an infrared scheme, and an ultrasonic wave scheme. Also, the touch panel may further include a control circuit. The capacitive scheme may recognize physical contact or proximity. The touch panel may further include a tactile layer. In this case, the touch panel may provide a user with a tactile reaction. In this case, the display unit 160 may operate as the key input unit 127.

When an image and text are included in content, the display unit 160 may be separated into a first area for displaying the image and a second area for displaying the text.

When an image and text are included in content, the display unit 160 may be separated into a first area for displaying the image and at least one identifier assigned to at least one image of the content, and a second area for displaying the text.

Although various embodiments of the present disclosure described below exemplify upward and downward scrolling as a user input provided on a display unit separated into a first area and a second area, the user input may include a touch motion, a tap motion, a flick motion, a drag-and-drop motion, and all types of user inputs that may be provided on the display unit, in addition to the upward and downward scrolling and thus, it may not be limited to the upward and downward scrolling.

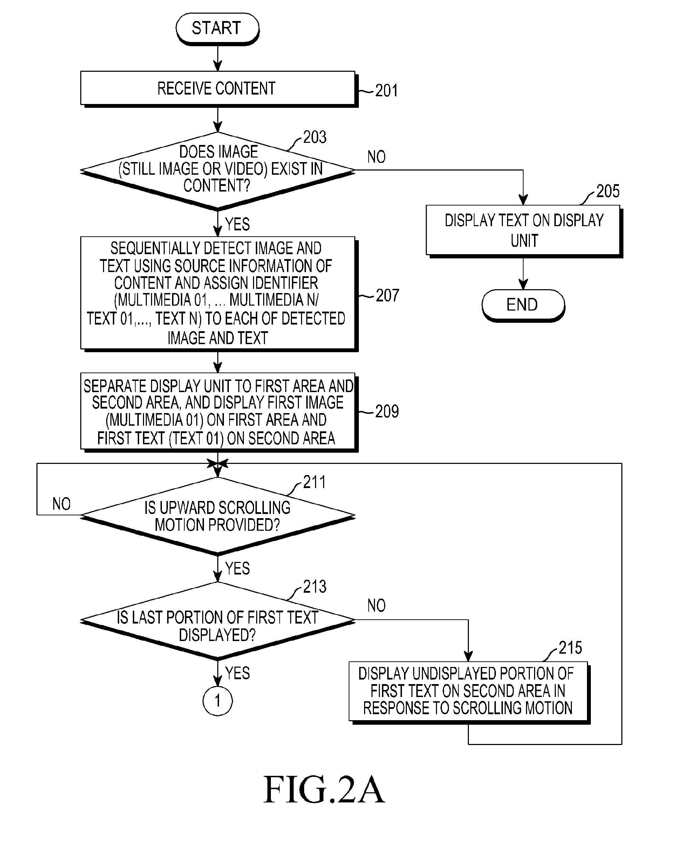

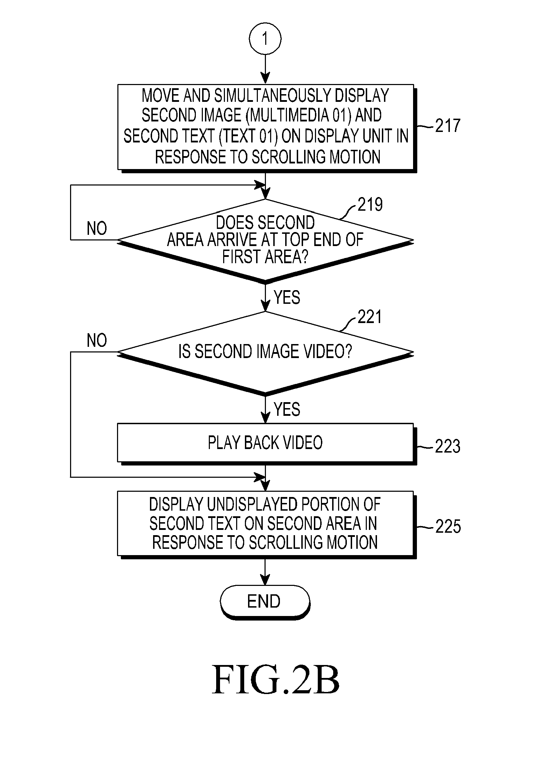

FIGs. 2A and 2B are flowcharts illustrating an operation of displaying content in an electronic device according to an embodiment of the present disclosure.

Referring to FIGs. 2A and 2B, when a content selected by a user is received in operation 201, the controller 110 analyzes source information of the content, for example, html information, in order to determine whether an image and text are included in the content in operation 203.

When it is determined that only text is included in the content in operation 203, the controller 110 displays the text included in the content on the display unit 160 in operation 205.

When it is determined that an image (a still image or a video) and text are included in the content in operation 203, the controller 110 distinguishes the image and the text. More specifically, in operation 207, the controller 110 sequentially detects at least one image and at least one text, e.g., using source information of the content, assigns an identifier to the at least one detected image and the at least one detected text, and stores the same.

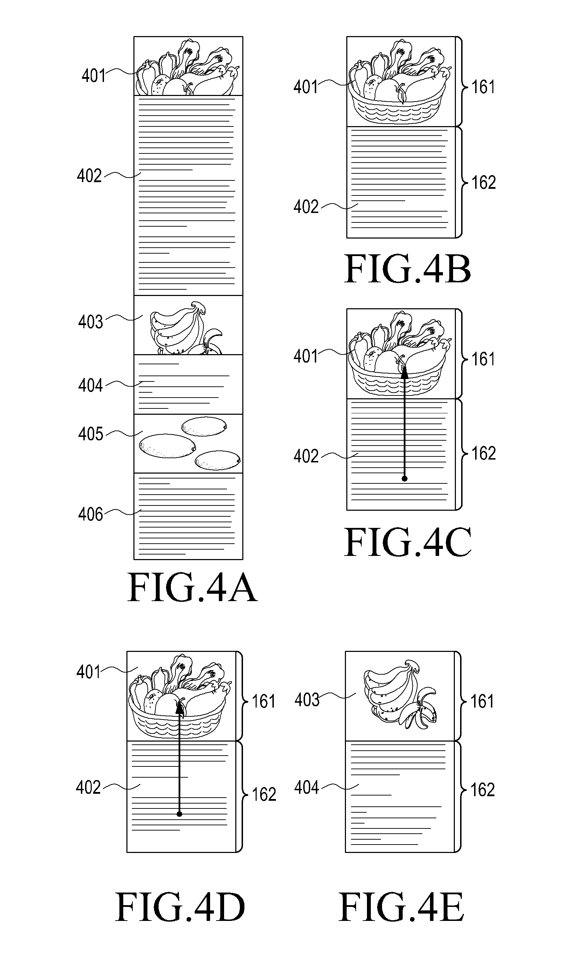

For example, the controller 110 assigns an identifier "Multimedia 01", ... ,"Multimedia N" to each of the at least one image, and assigns an identifier such as "Text 01", ... ,"Text N" to each of the at least one text. An operation of assigning an identifier to the image and the text included in content will be described in more detail below with reference to FIGs. 4A to 4E.

In operation 209, the controller 110 separates the display unit 160 into a first area and a second area, displays, in the first area, a first image to which a first identifier (Multimedia 01) is assigned from among at least one identifier (Multimedia 01 ,... , Multimedia N) assigned to the at least one detected image, and displays, in the second area, a first text (Text 01) including an identifier of the first image information from among the at least one identifier (Text 01, ... ,Text N) assigned to the at least one detected text.

When the size of the first image and the size of the first area are different, the controller 110 may enlarge or reduce the size of the first image to fit in the first area.

Additionally, when a ratio between the size of the image and the size of the first area does not match and a difference in the ratio is less than or equal to a threshold value (for example, less than or equal to 50%), the controller 110 may enlarge or reduce the horizontal length of the first image to correspond to the horizontal length of the first area and edits the vertical length of the first image to correspond to the vertical length of the first area, in operation 209. The controller 110 then displays the edited first image in the first area.

When a first image and a first text including an identifier of first image information are displayed in a first area and a second area, respectively, the controller 110 deactivates the first area and leaves the second area active.

Also, when a ratio between the size of the first image and the size of the first area does not match and a difference in the ratio is greater than or equal to a threshold value (for example, greater than or equal to 50%), the controller 110 may enlarge or reduce the horizontal length of the image to correspond to the horizontal length of the first area. The controller 110 edits the vertical length of the first image of which the horizontal length is enlarged or reduced to correspond to the vertical length of the first image, and displays the rescaled first image in the first area. The controller 110 then displays a popup icon or the like, which is used to display the original first image before being rescaled, in the first area that displays the rescaled first image.

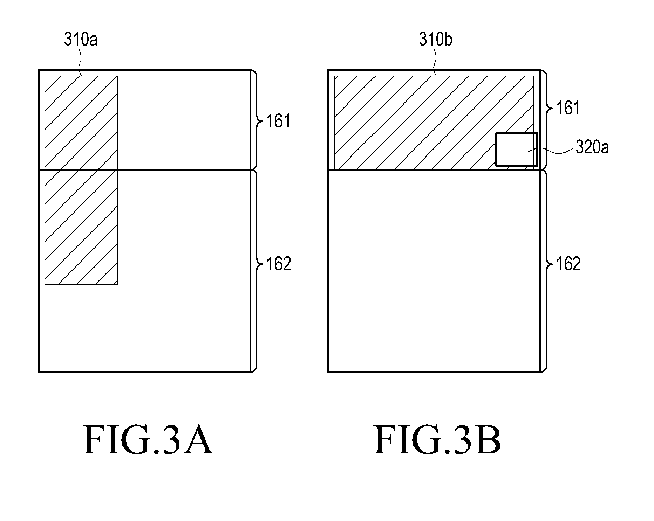

FIGs. 3A and 3B are diagrams illustrating an operation of editing an image in an electronic device according to an embodiment of the present disclosure. Specifically, FIGs. 3A and 3B illustrate a scenario in which a ratio between the size of the first image and the size of the first area does not match and a difference in the ratio is greater than or equal to a threshold value (for example, greater than or equal to 50 %).

Referring to FIG. 3A, when a difference in a ratio between the size of the first area 161 of the display unit and the size of an image 310a is greater than or equal to a threshold (for example, greater than or equal to 50%), the controller 110 enlarges the horizontal length of the image 310a to correspond to the horizontal length of the first area 161 and reduces the vertical length of the image 310a to correspond to the vertical length of the first area.

Referring to FIG. 3B, the controller 110 displays the rescaled image 310b in the first area 161. The controller 110 also displays, in the first area 161, a popup icon 320a, which is used to display the original image 310a before being rescaled to be viewed through selection.

Referring again to FIGs. 2A and 2B, in operation 211, the controller 110 determines whether an upward scrolling motion is provided on the display unit 160, which is separated into the first area and the second area.

When the upward scrolling motion on the display unit 160 is provided in operation 211, the controller 110 determines whether the second area displays a last portion of the first text in operation 213.

When the second area is not displaying the last portion of the first text in operation 213, the controller 110 maintains the display of the first image in the first area, moves the first text in the second area in the upward direction to correspond to the upward scrolling motion, in operation 215, in order to display an undisplayed portion of the first text in the second area. However, when the second area is displaying the last portion of the first text in operation 213, in operation 217, the controller 110 detects a second image that is a subsequent image of the first image and is assigned with a second identifier (Multimedia 02), and a second text (Text 02) including an identifier of second image information, from the memory 130, moves the second image and the second text to correspond to the upward scrolling motion, and simultaneously, displays the same on the display unit 160. The controller 110 may also cancel deactivation of the first area.

When the second image arrives at an edge of the first area in operation 219, while the second image and the second text are moved in the upward direction, e.g., corresponding to a speed generated from the upward scrolling motion, the controller 110 detects a type of the second image.

When it is determined that the second image is a video in operation 221, the controller 110 plays back the video in operation 223.

In operation 219, the second text may also arrive at an edge of the second area at the same time when the second image arrives at the edge of the first area.

When the second image is displayed in the first area and the second text is displayed in the second area, the controller 110 may deactivate the first area and while maintaining the activation of the second area.

When an upward scrolling motion is provided on display unit 160, while the second image is displayed in the first area and the second text is displayed in the second area, the controller 110 maintains the display of the second image in the first area and moves the second text of the second area to correspond to the upward scrolling motion, in order to display an undisplayed portion of the second text in the second area, in operation 225.

In operations 211 through 225, when an upward scrolling motion is provided on the display unit 160 and a last image and a last text of the content are displayed in the first area and the second area, respectively, an effect in which the last image and the last text disappear in the upward direction at the same time may be provided. Further, an indication may be displayed that all of the content has been displayed.

Although FIGs. 2A and 2B illustrate displaying an undisplayed portion of the text in the second area or moving the image and the text in an upward direction for display, through an upward scrolling motion, similarly, a downward or horizontal scrolling motion may also be used.

FIGs. 4A to 4E are diagrams illustrating an operation of displaying content in an electronic device according to an embodiment of the present disclosure.

Referring to FIG. 4A, when web content 300 related to news is received, the controller 110 assigns an identifier "Multimedia 01" to a first image 401 using source information or the like of the web content 300, detects at least one text portion associated with the first image 401 using source information or the like of a portion displayed on the lower portion of the first image 401, assigns a first text 402, that is, an identifier "Text 01", to at least one text portion 402, and stores the same. The controller 110 assigns an identifier "Multimedia 02" to a second image 403 existing subsequent to the first text 402, assigns a second text, that is, an identifier "Text 02", to at least one text portion 404 from which a relation with the second image is detected and which exists subsequent to the second image 403, and stores the same. The controller 110 assigns an identifier "Multimedia 03" to a third image 405 existing subsequent to the second text 404, assigns a third text, that is, an identifier "Text 03", to at least one text portion 406 from which a relation with the third image is detected and which exists subsequent to the third image 405, and stores the same.

As illustrated in FIG. 4B, the controller 110 displays the first image 401 in the first area 161 of the display unit 160, and displays the first text 402 in the second area 162 of the display unit 160.

When an upward scroll motion is provided on the display unit 160, as illustrated in FIG. 4C, while the first image 401 is displayed in the first area 161 and the first text 402 is displayed in the second area 162 of the display unit 160, the controller 110 maintains the display of the first image 401 in the first area 161 and moves the first text 402 of the second area 162 in the upward direction so as to display an undisplayed portion of the first text 402.

When the upward scrolling motion is provided, while the last portion of the first text 402 is displayed in the second area 162, as illustrated in FIG. 4D, the controller 110 moves the second image 403 and the second text 403 together to correspond to a direction and a speed of the upward scrolling motion for display.

Through the continuous upward scrolling motion, as illustrated in FIG. 4E, the controller 110 displays the second image 403 in the first area 161 and displays the second text 404 in the second area 162.

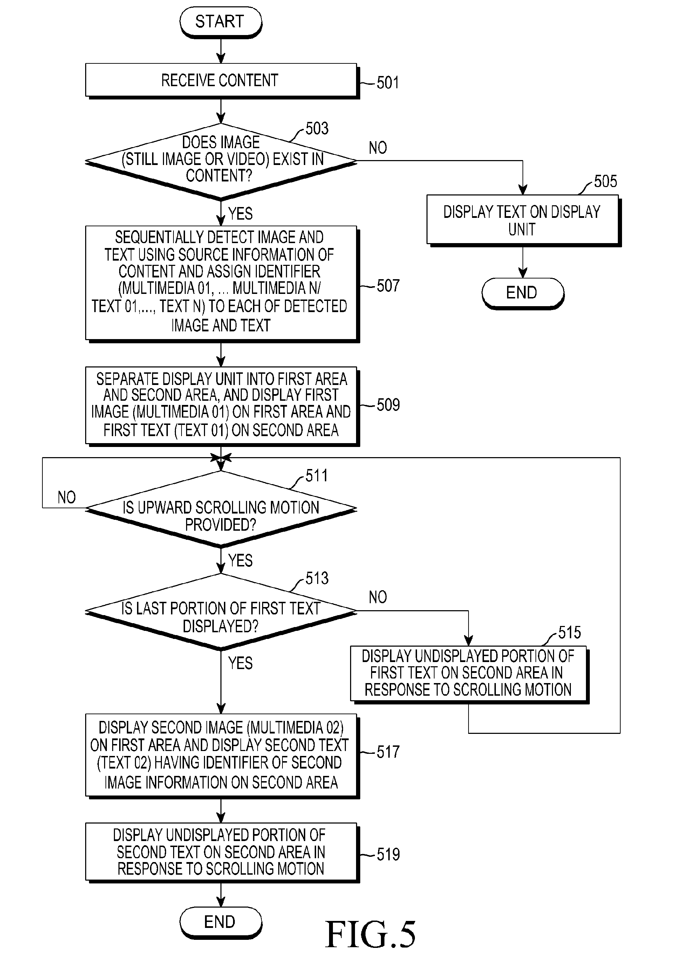

FIG. 5 is a flowchart illustrating an operation of displaying content in an electronic device according to an embodiment of the present disclosure.

Referring to FIG. 5, when a content selected by a user is received in operation 501, the controller 110 analyzes source information of the content, for example, html information, in order to determine whether an image and text are included in the content in operation 503.

When it is determined that only text is included in the content in operation 503, the controller 110 displays the text included in the content on the display unit 160 in operation 505.

When it is determined that an image (a still image or a video) and text are included in the content in operation 503, the controller 110 distinguishes the image and the text. More specifically, in operation 507, the controller 110 sequentially detects at least one image and at least one text, e.g., using source information of the content, assigns an identifier to the at least one detected image and the at least one detected text, and stores the same.

For example, the controller 110 assigns an identifier "Multimedia 01", ... ,"Multimedia N" to each of the at least one image, and assigns an identifier such as "Text 01", ... ,"Text N" to each of the at least one text. An operation of assigning an identifier to the image and the text included in the content in operation 507 has been described in the descriptions associated with FIGs. 4A to 4E.

In operation 509, the controller 110 separates the display unit 160 into a first area and a second area, displays, in the first area, a first image to which a first identifier (Multimedia 01) is assigned from among at least one identifier (Multimedia 01, ... , Multimedia N) assigned to the at least one detected image, and displays, in the second area, a first text (Text 01) including an identifier of first image information from among the at least one identifier (Text 01, ... ,Text N) assigned to the at least one detected text.

When the size of the first image and the size of the first area are different, the controller 110 enlarges or reduces the size of the first image to fit in the first area.

Additionally, when a ratio between the size of the first image and the size of the first area does not match and a difference in the ratio is less than or equal to a threshold value (for example, less than or equal to 50%), the controller 110 may enlarge or reduce the horizontal length of the first image to correspond to the horizontal length of the first area and edits the vertical length of the first image to correspond to the vertical length of the first area, in operation 509. The controller 110 then displays the edited first image in the first area.

When the first image and the first text including an identifier of first image information are displayed in the first area and the second area, respectively, the controller 110 deactivates the first area and leaves the second area active.

Also, when a ratio between the size of the first image and the size of the first area does not match and a difference in the ratio is greater than or equal to a threshold value (for example, greater than or equal to 50%), the controller 110 may enlarge or reduce the horizontal length of the image to correspond to the horizontal length of the first area. The controller 110 edits the vertical length of the first image of which the horizontal length is enlarged or reduced to correspond to the vertical length of the first image, and displays the rescaled first image in the first area. The controller 110 then displays a popup icon or the like, which is used to display the original first image before being rescaled, in the first area that displays the rescaled first image.

In operation 511, the controller 110 determines whether an upward scrolling motion is provided on the display unit 160, which is separated into the first area and the second area.

When it is determined that the upward scrolling motion on the display unit 160 is provided in operation 511, the controller 110 determines whether the second area displays a last portion of the first text in operation 513.

When the second area does not display the last portion of the first text in operation 513, the controller 110 maintains the display of the first image in the first area and moves the first text of the second area to correspond to the upward scrolling motion in operation 515, in order to display an undisplayed portion of the first text in the second area. However, when the second area displays the last portion of the first text in operation 513, in operation 517, the controller 110 changes an image to a second image, which is a subsequent image of the first image and is assigned with a second identifier (Multimedia 02), for display. In operation 517, the controller 110 may change text to a second text (Text 02) having an identifier of second image information, for display in the second area.

When the upward scrolling motion is provided on the display unit 160 while the second image is displayed in the first area and the second text is displayed in the second area, in operation 519, the controller 110 moves the second text to correspond to the upward scrolling motion, in order to display an undisplayed portion of the second text in the second area.

Although FIG. 5 illustrates moving text in the second area for display of an undisplayed portion of the text or changing an image and text for display in the first area and the second area, through an upward scrolling motion, similarly, a downward or horizontal scrolling motion may also be utilized.

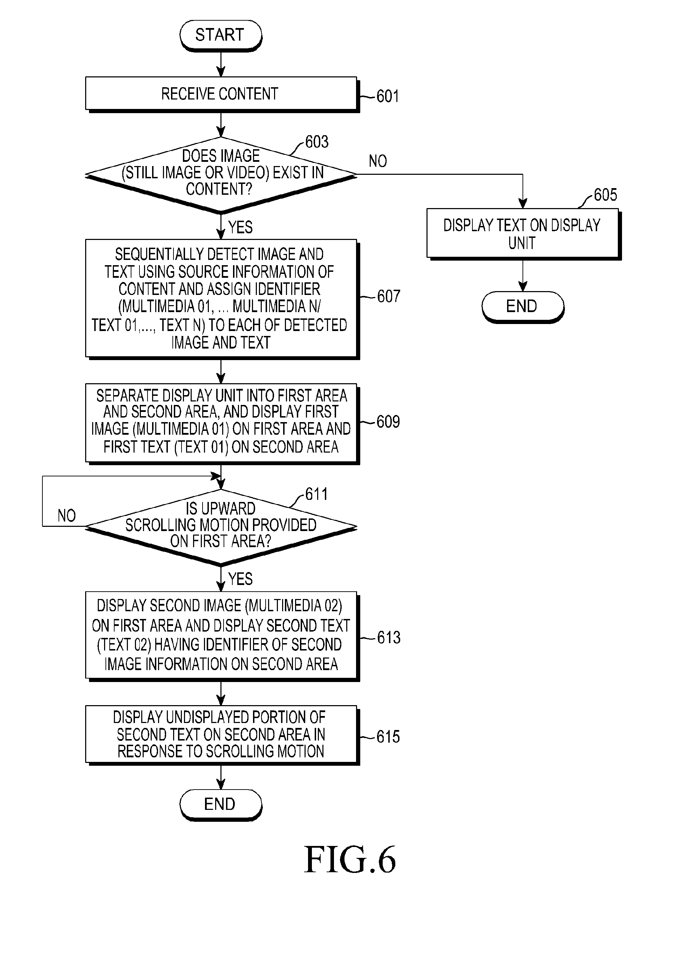

FIG. 6 is a flowchart illustrating an operation of displaying content in an electronic device according to an embodiment of the present disclosure. In FIG. 6, operations 601 to 609 are the same as operations 501 to 509 of FIG. 5 described above, and therefore, a repetitive description of these operations will be omitted herein.

Referring to FIG. 6, when it is determined that an upward scrolling motion is provided in the first area in operation 611, the controller 110 changes an image to a second image that is a subsequent image of the first image and is assigned with a second identifier (Multimedia 02) for display in the first area in operation 613. For example, in operation 613, the controller 110 may change text to a second text (Text 02) having an identifier of second image information for display in the second area.

When the upward scrolling motion is provided on the display unit 160 while the second image is displayed in the first area and the second text is displayed in the second area, the controller 110 moves the second text to correspond to the upward scrolling motion, in order to display an undisplayed portion of the second text in the second area in operation 615.

Although FIG. 6 illustrates updating for the display of an image and text in a first area and a second area, or moving text for the display of an undisplayed portion of the text in the second area, through an upward scrolling motion, similarly, a downward or horizontal scrolling motion may also be utilized.

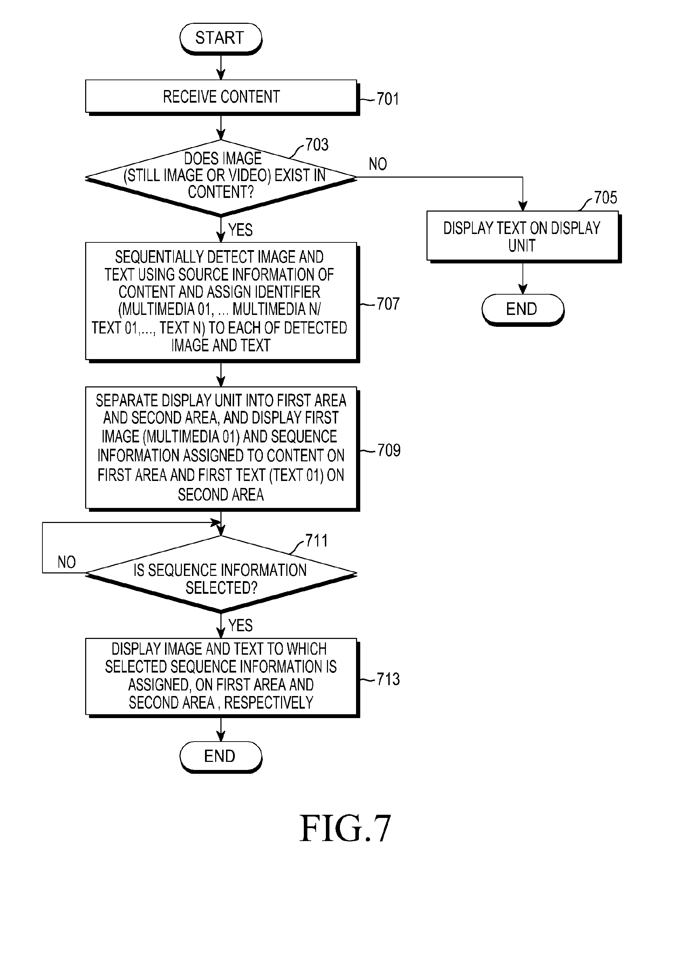

FIG. 7 is a flowchart illustrating an operation of displaying content in an electronic device according to an embodiment of the present disclosure. In FIG. 7, operations 701 to 707 are the same as operations 501 to 507 of FIG. 5 described above, and therefore, a repetitive description of these operations will be omitted herein.

Referring to FIG. 7,in operation 709, the controller 110 separates the display unit 160 into a first area and a second area, and displays, in the first area, a first image to which a first identifier (Multimedia 01) is assigned from among at least one identifier (Multimedia 01,.., Multimedia N) assigned to the at least one detected image. The controller 110 displays, on a predetermined area of the first area where the first image is displayed, sequence information (1, ... , N) included in each of the at least one identifier (Multimedia 01, ... , Multimedia N ) assigned to the at least one image included in the content. When the first image is displayed in the first area, sequence information ("1") indicating the first image from among a plurality of pieces of sequence information (1, .. ,N) may be displayed to be distinguished from others, in order to inform that the first image is currently displayed in the first area. Also, in operation 709, the controller 110 displays, in the second area, a first text (Text 01) including an identifier of first image information from among the at least one identifier (Text 01, ... ,Text N) assigned to the at least one detected text.

When the size of the first image and the size of the first area are different and the first image is displayed in the first area in operation 709, the controller 110 may enlarge or reduce the size of the first image to fit in the first area.

When a ratio between the size of the first image and the size of the first area does not match and a difference in the ratio is less than or equal to a threshold value (for example, less than or equal to 50%), the controller 110 may enlarge or reduce the horizontal length of the first image to correspond to the horizontal length of the first area and edits the vertical length of the first image to correspond to the vertical length of the first area, in operation 709. The controller 110 then displays the edited first image in the first area.

Further, when a ratio between the size of the first image and the size of the first area does not match and a difference in the ratio is greater than or equal to a threshold value (for example, greater than or equal to 50%), the controller 110 may enlarge or reduce the horizontal length of the first image to correspond to the horizontal length of the first area. The controller 110 edits the vertical length of the first image of which the horizontal length is enlarged or reduced to correspond to the vertical length the first image, and displays the rescaled first image in the first area. The controller 110 may also display a popup icon or the like, which is used to display the original first image before being rescaled, in the first area that displays the rescaled first image.

When the first image and the first text including an identifier of first image information are displayed in the first area and the second area, respectively, the controller 110 activates the first area and the second area.

When one of the at least one sequence information displayed in the first area is selected in operation 711, the controller 110 detects an image and text to which identifiers including the selected sequence information are assigned in order to display the same in the first area and the second area, respectively.

According to the, above-described embodiments of the present disclosure, a display unit is separated into an upper portion and a lower portion in a vertical direction mode of an electronic device, and an upper portion and a lower portion may be set to a first area and a second area, respectively.

According to the various, above-described embodiments of the present disclosure, while an image is displayed in a first area of a display unit and text is display in a second area of the display unit in a vertical direction mode of an electronic device, when an upward or downward scrolling motion is provided on the display unit, a subsequent or previous image or text may be displayed, and when the left direction or right direction scrolling motion is provided on the display unit, a previous or subsequent content may be displayed.

According to the various, above-described embodiments of the present disclosure, a display unit is separated into a left area and a right area in the horizontal direction mode of an electronic device, and the left area and the right area may be set to a first area and a second area, respectively.

According to the various, above-described embodiments of the present disclosure, while an image is displayed in a first area of a display unit and text is display in a second area of the display unit in the horizontal direction mode of an electronic device, when a scrolling motion is provided in the left or right direction to the display unit, a subsequent or previous image or text may be displayed, and when a scrolling motion is provided in the upward or downward direction to the display unit, a previous or subsequent content may be displayed.

According to the various, above-described embodiments of the present disclosure, while an image is displayed in a first area of a display unit and text is displayed in a second area of the display unit in a vertical direction mode of an electronic device, when the electronic device is switched into a horizontal direction mode, the image and the text that have been displayed in the vertical direction mode may be displayed, respectively, in the first area and the second area in the horizontal direction mode of the display unit.

According to the various, above-described embodiments, at least a part of a device (for example, modules or functions thereof) or a method (for example, operations) according to the various embodiments of the present disclosure may be embodied, for example, by a command stored in a computer readable storage medium in a form of a programming module. When the command is executed by one or more processors (for example, the processor 210), the one or more processors may execute a function corresponding to the command. For example, the computer readable storage medium may be the memory 220. For example, at least a part of the programming module may be implemented (for example, executed) by the processor 210. At least a part of the programming module may include, for example, a module, a program, a routine, a set of instructions and/or a process for performing one or more functions.

Examples of the computer readable recoding medium include magnetic media such include magnetic media, such as a hard disk, a floppy disk and a magnetic tape, optical media, such as a Compact Disc Read Only Memory (CD-ROM) and a Digital Versatile Disc (DVD), magneto-optical media, such as a floptical disk, and a hardware device specially configured to store and execute a program command, such as a Read Only Memory (ROM), a Random Access Memory (RAM) and a flash memory. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

While the present disclosure has been particularly shown and described with reference to certain embodiments thereof, it will be understood by those of ordinary skill in the art that various changes in form and details may be made therein without departing from the spirit and scope of the present disclosure as defined by the following claims and their equivalents.

## Claims

1. An electronic device, comprising:
a display unit configured to diplay an image in a first area and display text in a second area, when content including the image and the text are provided; and
a controller configured to detect a user input provided on the display unit, move a portion of the content in response to the user input, and display an undisplayed portion of at least one of the image and the text in the first and second areas of the display unit, respectively.

2. The electronic device of claim 1, wherein the controller is configuered to:
detect a first image from the content, when it is determined that the content includes at least one image and at least one text;
detect at least one text portion associated with the first image;
determine the detected at least one text portion to be a first text; and
assigne, to each portion included in the first text, an identifier including first image information associated with the first image and sequence information.

3. The electronic device of claim 1, wherein, when a portion of the text includes an identifier of first image information and is not currently displayed in the second area, and the user input is provided on the display unit, the controller is configured to display the undisplayed portion of the text in the second area in response to the user input.

4. The electronic device of claim 1, wherein the controller is configured to:
detect other images, other than a first image of the content, from at least one image of the content;
assign an identifier including sequence information to each of the other images;
detect other texts, other than a first text of the content, from at least one text of the content; and
assign, to each of the other texts, an identifier including information associated with a related image, sequence information of the image, and sequence information of portions included in a corresponding text.

5. The electronic device of claim 1, wherein, when sequence information of at least one of the image of the content displayed in the first area and the text of the content displayed in the second area is changed according to the user's input provided on the display unit, the controller is configured to display another image of the content in the first area or to display another text of the content in the second area.

6. The electronic device of claim 1, wherein the controller is configured to:
display, when the image and the text are included in the content, a first image of the content in the first area and display a first text of the content, which has an identifier of first image information in the second area;
move, when the user input is provided on the display unit, the first text in response to the user input, and to display an undisplayed portion of the first text in the second area; and
display, when the user input is provided on the display unit while a last portion of the first text is displayed in the second area, a second image of the content, which is a subsequent image of the first image, and a second text of the content, which has an identifier of second image information, in response to the user input,
wherein, when the second image is a video and is displayed in the first area, the controller is configured to play back the second image.

7. The electronic device of claim 6, wherein, when the second image is displayed in the first area and the second text is displayed in the second area, and the user input is provided, the controller is configured to move the second text in response to the user input and to display an undisplayed portion of the second text in the second area.

8. The electronic device of claim 1, wherein the controller is configured to:
display, when the image and the text are included in the content, in the first area, a first image of the content and at least one sequence information assigned to the image included in the content, and display, in the second area, a first text of the content that has an identifier of first image information; and
display, when predetermined sequence information is selected from the first area, in the first area, an image of the content corrsponding to the selected sequence information, and display, in the second area, text of the content that has an identifier of image information associated with the displayed image .

9. A method of displaying content in an electronic device, the method comprising:
displaying an image and text in a first area and a second area of a display unit, respectively, when the image and the text are included in the content;
detecting a user input provided on the display unit; and
moving the text in response to the user input, to display an undisplayed portion of the text in the second area.

10. The method of claim 9, further comprising:
detecting a first image from the content when it is determined that the content includes at least one image and at least one text;
detecting at least one text portion associated with the first image, and determining the detected text portion to be a first text; and
assigning, to each portion included in the first text, an identifier including first image information associated with the first image and sequence information.

11. The method of claim 9, wherein displaying the undisplayed portion comprises:
displaying when a portion of the text exists that has an identifier of image information and is not currently displayed in the second area when the user input is provided on the display unit, the undisplayed portion of the text in the second area in response to the user input.

12. The method of claim 9, further comprising:
detecting other images, other than the image of the content;
assigning an identifier including sequence information to each of the other images;
detecting other texts, other than the text of the content; and
assigning, to each of the other texts, an identifier including information associated with a related image, sequence information of the related image, and sequence information of portions included in the other text.

13. The method of claim 9, further comprising:
displaying, when sequence information of the image of the content displayed in the first area and the text of the content displayed in the second area is changed according to the user's input provided on the display unit, another image of the content in the first area or displaying another text of the content in the second area.

14. The method of claim 9, further comprising:
when the image and the text are included in the content, displaying a first image of the content in the first area and displaying a first text of the content, which has an identifier of first image information in the second area;
moving the first text in response to the user input, to display an undisplayed portion of the first text in the second area; and
when the user input is provided on the display unit while a last portion of the first text is displayed in the second area, displaying a second image of the content, which is a subsequent image of the first image, and a second text of the content, which has an identifier of second image information, in response to the user input,
wherein, when the second image is a video displayed in the first area, the method further comprises playing back the second image.

15. The method of claim 14, wherein, when the second image is displayed in the first area and the second text is displayed in the second area, the method further comprises moving the second text in response to the user input, to display an undisplayed portion of the second text in the second area.

16. The method of claim 9, further comprising:
when the image and the text are included in the content, displaying, in the first area, a first image of the content and at least one sequence information assigned to at least one image included in the content, and displaying, in the second area, a first text of the content that has an identifier of first image information; and
when predetermined sequence information is selected from the first area, displaying, in the first area, an identified image of the content that has the selected sequence information, and displaying, in the second area, text of the content that has an identifier of image information associated with the displayed, identified image.
